(19) Europäisches Patentamt

European Patent Office

Office européen des brevets

(11) Veröffentlichungsnummer: **0 276 734 B1**

(12) **EUROPÄISCHE PATENTSCHRIFT**

(45) Veröffentlichungstag der Patentschrift: **15.04.92**

(21) Anmeldenummer: **88100741.3**

(22) Anmeldetag: **20.01.88**

(51) Int. Cl.⁵: **C08F 297/08**, C08F 210/06, C08F 4/64, C08F 2/34, C08F 2/38

(54) Verfahren zum Herstellen von Propylen-Ethylen-Polymerisaten.

(30) Priorität: **24.01.87 DE 3702038**

(43) Veröffentlichungstag der Anmeldung:
**03.08.88 Patentblatt 88/31**

(45) Bekanntmachung des Hinweises auf die
Patenterteilung:
**15.04.92 Patentblatt 92/16**

(84) Benannte Vertragsstaaten:
**AT BE DE ES FR GB IT**

(56) Entgegenhaltungen:
**EP-A- 0 037 291**
**EP-A- 0 086 300**
**EP-A- 0 131 268**

(73) Patentinhaber: **BASF Aktiengesellschaft**
**Carl-Bosch-Strasse 38**
**W-6700 Ludwigshafen(DE)**

(72) Erfinder: **Buechner Oskar, Dr.**
**Sickingenstrasse 4**
**W-6724 Dudenhofen(DE)**
Erfinder: **Gruber, Wolfgang, Dr.**
**Lorscher Ring 2 b**
**W-6710 Frankenthal(DE)**

## Beschreibung

Die vorliegende Erfindung betrifft ein Verfahren zum Herstellen von Propylen-Ethylen-Polymerisaten, wobei man zunächst

(A) in einer ersten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus Propylen durch Zufuhr eines Ziegler-Natta-Katalysatorsystems aus

(1) einer Titan-Katalysatorkomponente,

(2) einer Organoaluminium-Katalysatorkomponente der Formel $AlR_mX_{3-m}$, worin stehen

    X      für einen Rest OR, Chlor, Brom bzw. Wasserstoff,

    R      für einen $C_1$-$C_{18}$-Kohlenwasserstoffrest,

    m      für eine Zahl von 1 bis 3 sowie

(3) - gegebenenfalls - einer weiteren Katalysatorkomponente

homopolymerisiert, mit den Maßgaben, daß in dieser ersten Polymerisationszone (i) bei einem Gesamtdruck von 20 bis 35 bar sowie einer Temperatur von 60 bis 90°C gearbeitet wird, und (ii) das Verhältnis Propylen-Partialdruck : Wasserstoff-Partialdruck 100:0,01 bis 100:15 beträgt, und dann

(B) in einer zweiten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus ein Gemisch aus Propylen und Ethylen durch Zufuhr des in der ersten Polymerisationszone erhaltenen Reaktionsgutes - sowie gegebenenfalls zusätzlicher Katalysatorkomponente (2) - dem darin vorliegenden Propylen-Homopolymerisat hinzupolymerisiert, mit den Maßgaben, daß in dieser zweiten Polymerisationszone (i) bei einem Gesamtdruck von 10 bis 20 bar sowie einer Temperatur von 50 bis 80°C gearbeitet wird, (ii) das Verhältnis Propylen-Partialdruck : Ethylen-Partialdruck 100:10 bis 100:70 und das Verhältnis Propylen-Partialdruck : Wasserstoff-Partialdruck 100:2 bis 100:70 beträgt, und (ii) das Verhältnis Gewicht des in der ersten Polymerisationszone (A) in Polymerisat umgesetztes Propylen : Gewicht des in der zweiten Polymerisationszone (B) in Polymerisat umgesetztes Gemisch aus Propylen und Ethylen einen Wert zwischen 100:10 bis 100:60 hat.

Verfahren dieser Art sind in einer Reihe von Varianten bekannt geworden, wobei z.B. auf die US-PS 4 454 299 sowie die ZA-PSen 0084/3561, 0084/3563 und 0084/5261 als repräsentative Publikationen verweisen werden kann.

Die bekannten Verfahren der in Rede stehenden Art sowie insbesondere auch die resultierenden Verfahrensprodukte haben sich, übers Ganze gesehen, in der Technik, so auch im Automobilbau, bewährt; - was indessen nicht ausschließt, daß sie noch den einer oder anderen Wunsch offenlassen. So ist. z.B. bislang das erstrebenswerte Ziel nicht zu erreichen gewesen, Polymerisate zu gewinnen, die eine sehr günstige Balance von Steifigkeit, Zähigkeit bei Raumtemperatur und Kälteschlagzähigkeit aufweisen; - also Polymerisate, die speziell geeignet sind für den Automobilbau, z.B. als Material für Stoßfänger oder Instrumententafeln.

Hier setzt die Aufgabe an, die zur vorliegenden Erfindung geführt hat: Das eingangs definierte Verfahren so auszugestalten, daß es erlaubt, Polymerisate mit dem vorerwähnten Eigenschaftsspektrum in vorteilhafter Weise herzustellen.

Es wurde gefunden, daß diese Aufgabe gelöst werden kann, wenn man bei dem betroffenen Verfahren in einer weiteren Polymerisationszone (C) aus der Gasphase heraus Ethylen unter bestimmten Maßgaben homopolymerisiert und das dabei erhaltene Reaktionsgut ebenfalls der zweiten Polymerisationszone (B) zuführt.

Gegenstand der vorliegenden Erfindung ist dementsprechend ein Verfahren zum Herstellen von Propylen-Ethylen-Polymerisaten, wobei man zunächst

(A) in einer ersten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus Propylen durch Zufuhr eines Ziegler-Natta-Katalysatorsystems aus

(1) einer Titan-Katalysatorkomponente,

(2) einer Organoaluminium-Katalysatorkomponente der Formel $AlR_mX_{3-m}$, worin stehen

    X      für einen Rest OR, Chlor, Brom bzw. Wasserstoff,

    R      für einen $C_1$-$C_{18}$-Kohlenwasserstoffrest,

    m      für eine Zahl von 1 bis 3 sowie

(3) - gegebenenfalls - einer weiteren Katalysatorkomponente

homopolymerisiert, mit den Maßgaben, daß in dieser ersten Polymerisationszone (i) bei einem Gesamtdruck von 20 bis 35 bar sowie einer Temperatur von 60 bis 90°C gearbeitet wird, und (ii) das Verhältnis Propylen-Partialdruck : Wasserstoff-Partialdruck 100:0,01 bis 100:15 beträgt, und dann

(B) in einer zweiten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus ein Gemisch aus Propylen und Ethylen durch Zufuhr des in der ersten Polymerisationszone erhaltenen Reaktionsgutes - sowie gegebenenfalls zusätzlicher Katalysatorkomponente (2) - dem darin vorliegenden Propylen-Homopolymerisat hinzupolymerisiert, mit den Maßgaben, daß in dieser zweiten Polymerisationszone (i) bei einem Gesamtdruck von 10 bis 20 bar sowie einer Temperatur von 50 bis 80°C gearbeitet wird, (ii) das Verhältnis Propylen-Partialdruck : Ethylen-Partialdruck 100:10 bis 100:70 und das Verhältnis Propylen-Partialdruck : Wasserstoff-Partialdruck 100:2 bis 100:70 beträgt, und (ii) das Verhältnis Gewicht des in der ersten Polymerisationszone (A) in Polymerisat umgesetztes Propylen : Gewicht des in der zweiten Polymerisationszone (B) in Polymerisat umgesetztes Gemisch aus Propylen und Ethylen einen Wert zwischen 100:10 bis 100:60 hat.

Das erfindungsgemäße Verfahren ist dadurch gekennzeichnet, daß man zusätzlich

(C) in einer weiteren Polymerisationszone - gegebenenfalls in Anwesenheit von Wasserstoff als Molekulargewichtsregler - in einem gerührten Bett aus kleinteiligem Polymerisat bei Abwesenheit eines flüssigen Reaktionsmediums aus der Gasphase heraus Ethylen mittels Ziegler- oder Phillips-Katalyse homopolymerisiert, mit den Maßgaben, daß in dieser weiteren Polymerisationszone (i) bei einem Gesamtdruck von 20 bis 45 bar sowie einer Temperatur von 80 bis 120°C gearbeitet wird, (ii) - im gegebenen Fall - das Verhältnis Ethylen-Partialdruck : Wasserstoff-Partialdruck 100:0,01 bis 100:20 beträgt und (iii) das Verhältnis Gewicht des in der ersten Polymerisationszone (A) in Polymerisat umgesetztes Propylen : Gewicht des in der weiteren Polymerisationszone (C) in Polymerisat umgesetztes Ethylen einen Wert zwischen 100:5 bis 100:40 hat, und das hierbei erhaltene Reaktionsgut ebenfalls der zweiten Polymerisationszone (B) zuführt.

Zu dem erfindungsgemäßen Verfahren ist im einzelnen das folgende zu bemerken:

Das Polymerisationsverfahren als solches kann - unter Beachtung der kennzeichnenden Besonderheit - in einschlägig üblichen technologischen Ausgestaltungen durchgeführt werden, insbesondere als taktweisekontinuierliches Verfahren. Die erwähnten technologischen Ausgestaltungen - mit anderen Worten: die technologischen Varianten der Gasphasen-Block-Copolymerisation - sind in den eingangs zitierten Publikationen so eingehend und detailliert abgehandelt, daß sich hier nähere Ausführungen zu ihnen erübrigen.

Der Vollständigkeit halber ist allenfalls zu erwähnen, daß beim erfindungsgemäßen Verfahren die Ausgestaltung sowie das Arbeiten in der weiteren Polymerisationszone (C) in sinngemäßer Analogie zur Ausgestaltung sowie Arbeitsweise in der ersten Polymerisationszone (A) erfolgen sollte; - wobei für diese beiden Polymerisationszonen auch gleichermaßen gilt, daß es von Vorteil ist, wenn der in ihnen herrschende jeweilige Gesamtdruck spürbar (d.h. 5 bar oder mehr) höher ist als der Gesamtdruck in der zweiten Polymerisationszone (B).

Was die stoffliche Seite der beim erfindungsgemäßen Verfahren einzusetzenden Katalysatorsysteme betrifft, ist im einzelnen das folgende zu sagen:

Zur Titan-Katalysatorkomponente (1):

Hier kommen die einschlägig üblichen in Betracht, vor allem solche, die zu möglichst gleichförmig runden, gut rieselfähigen Polymerisatteilchen führen; - wobei sich die folgenden, zur Verwendung im erfindungsgemäßen Verfahren besonders geeigneten zwei Gruppen hervorheben: (i) feinteiliges Titantrichlorid-Cokristallisat der Formel $TiCl_3 \bullet 1/3 \, AlCl_3$ sowie (ii) mit Elektronendonatoren bzw. Lewis-Basen modifiziertes feinteiliges Cokristallisat der Formel $TiCl_3 \bullet 1/3 \, AlCl_3$, welches Ether oder Ester als Modifikanten aufweist, sowie Umsetzungsprodukte von Magnesiumverbindungen mit Titanhalogeniden unter Zusatz von speziellen Estern oder Anhydriden. Derartige Titan-Katalysatorkomponenten sind aus der Literatur (vgl. dazu etwa die eingangs zitierten Publikationen) und Praxis so wohlbekannt, daß auf sie nicht näher eingegangen zu werden braucht.

Zur Organoaluminium-Katalysatorkomponente (2):

Als Organoaluminium-Katalysatorkomponente kommen wiederum die einschlägig üblichen in Betracht; sie sind ebenfalls aus Literatur und Praxis so wohlbekannt, daß auf sie nicht näher eingegangen zu werden braucht. Als herausragende Vertreter seien beispielsweise genannt das Triethylaluminium und das Diethylaluminiumchlorid.

Zu den - gegebenenfalls mitzuverwendenden - weiteren Katalysatorkomponenten (3):

Auch hier kommen wiederum die einschlägig üblichen, wie insbesondere phenolische Stoffe bzw. Silanverbindungen in Betracht; sie sind ebenfalls aus Literatur und Praxis so wohlbekannt, daß auf sie nicht näher eingegangen zu werden braucht.

Zu den Ziegler- bzw. Phillips-Katalysatoren bzw. -Katalysatorsystemen zur Ethylen-Homopolymerisation:

Hier kommen abermals die einschlägig üblichen in Betracht, vor allem solche, die zu möglichst gleichförmig runden, gut rieselfähigen Polymerisatteilchen führen; - auch diese Katalysatoren bzw. Katalysatorsysteme sind derart wohlbekannt, daß sie an dieser Stelle keiner näheren Beschreibung bedürfen.

Insgesamt läßt sich somit sagen, daß die stoffliche Seite des erfindungsgemäßen Verfahrens als solche im Rahmen des einschlägig üblichen liegt und keine Besonderheiten aufweist.

Beispiel 1

Es wird taktweise-kontinuierlich gearbeitet mit einer Kessel-Kaskade aus drei Rührkesseln von je 200 l Nutzvolumen; die Kessel sind V-förmig geschaltet: Dem Kessel zur Herstellung des Endproduktes ( = zweite Polymerisationszone B) ist sowohl ein Kessel zur Herstellung des Propylen-Homopolymerisats ( = erste Polymerisationszone A) als auch ein Kessel zur Herstellung des Ethylen-Homopolymerisats ( = weitere Polymerisationszone C) vorgeschaltet.

Zum Herstellen des Propylen-Ethylen-Polymerisats verfährt man so, daß man zunächst

(A) in der ersten Polymerisationszone in Anwesenheit von Wasserstoff als Molekulargewichtsregler in einem gerührten Bett aus kleinteiligem Polypropylen bei Abwesenheit eines flüssigen Reatkionsmediums aus der Gasphase heraus Propylen durch Zufuhr eines Ziegler-Natta-Katalysatorsystems aus

(1) einer Titan-III-Komponente der Formel $TiCl_3 \bullet 1/3$ $AlCl_3 \bullet 1/3$ Benzoesäure-n-propylester,

(2) Diethylaluminiumchlorid sowie

(3) n-Octadecyl-$\beta$-(4'-oxy-3', 5'-di-tert.-butylphenyl)-propionat

(mit der Maßgabe, daß das Atomverhältnis Titan aus der Titan-III-Komponente (1) : Aluminium aus dem Diethylaluminiumchlorid (2) 1:6 und das Molverhältnis Diethylaluminiumchlorid (2) : weiterer Katalysatorkomponente (3) - d.h. dem n-Octadecyl-$\beta$-(4'-oxy-3',5'-di-tert.-butylphenyl)-propionat - 1:0,04 beträgt) homopolymerisiert, mit den Maßgaben, daß in dieser ersten Polymerisationszone (i) bei einem Gesamtdruck von 28 bar sowie einer Temperatur von 70°C gearbeitet wird, und (ii) das Verhältnis Propylen-Partialdruck : Wasserstoff-Partialdruck 100:2 beträgt, und dann

(B) in einer zweiten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus ein Gemisch aus Propylen und Ethylen durch Zufuhr des in der ersten Polymerisationszone erhaltenen Reaktionsgutes - sowie zusätzlicher Katalysatorkomponente (2) im Atomverhältnis Titan aus der Titan-III-Komponente (1) : Aluminium aus dem zusätzlichen Diethylaluminiumchlorid (2) von 1:4 - dem darin vorliegenden Propylen-Homopolymerisat hinzupolymerisiert, mit den Maßgaben, daß in dieser zweiten Polymerisationszone (i) bei einem Gesamtdruck von 15 bar sowie einer Temperatur von 55°C gearbeitet wird, (ii) das Verhältnis Propylen-Partialdruck : Ethylen-Partialdruck 100:35 und das Verhältnis Propylen-Partialdruck : Wasserstoff-Partialdruck 100:38 beträgt, und (ii) das Verhältnis Gewicht des in der ersten Polymerisationszone (A) in Polymerisat umgesetztes Propylen : Gewicht des in der zweiten Polymerisationszone (B) in Polymerisat umgesetztes Gemisch aus Propylen und Ethylen den Wert 100:30 hat.

Der Erfindung entsprechend wird ferner so verfahren, daß man zusätzlich

(C) in einer weiteren Polymerisationszone in einem gerührten Bett aus kleinteiligem Polyethylen bei Abwesenheit eines flüssigen Reaktionsmediums aus der Gasphase heraus Ethylen mittels eines handelsüblichen Phillips-Katalysators (2 % $CrO_3$ auf $SiO_2$, bei 900°C im Luftstrom aktiviert) homopolymerisiert, mit den Maßgaben, daß in dieser weiteren Polymerisationszone (i) bei einem Gesamtdruck von 30 bar sowie einer Temperatur von 108°C gearbeitet wird, und (iii) das Verhältnis Gewicht des in der ersten Polymerisationszone (A) in Polymerisat umgesetztes Propylen : Gewicht des in der weiteren Polymerisationszone (C) in Polymerisat umgesetztes Ethylen den Wert 100:17 hat, und das hierbei erhaltene Reaktionsgut ebenfalls der zweiten Polymerisationszone (B) zuführt.

Das so erhaltene Propylen-Ethylen-Polymerisat (26,5 kg/h) wird in einem Extruder in üblicher Weise dechloriert, stabilisiert und granuliert; es weist eine sehr günstige Balance von Steifigkeit, Zähigkeit bei Raumtemperatur und Kälteschlagzähigkeit auf.

Beispiel 2

Es wird taktweise-kontinuierlich gearbeitet mit einer Kessel-Kaskade aus drei Rührkesseln von je 200 l Nutzvolumen; die Kessel sind V-förmig geschaltet: Dem Kessel zur Herstellung des Endproduktes ( = zweite Polymerisationszone B) ist sowohl ein Kessel zur Herstellung des Propylen-Homopolymerisats ( = erste Polymerisationszone A) als auch ein Kessel zur Herstellung des Ethylen-Homopolymerisats ( = weitere Polymerisationszone C) vorgeschaltet.

Zum Herstellen des Propylen-Ethylen-Polymerisats verfährt man so, daß man zunächst

(A) inder ersten Polymerisationszone in Anwesenheit von Wasserstoff als Molekulargewichtsregler in einem gerührten Bett aus kleinteiligem Polypropylen bei Abwesenheit eines flüssigen Reaktionsmediums aus der Gasphase heraus Propylen durch Zufuhr eines Ziegler-Natta-Katalysatorsystems aus

(1) einer Titan-Katalysatorkomponente, hergestellt gemäß dem Beispiel der DE-OS 34 28 478,

(2) Triethylaluminium sowie

(3) Triethoxyphenylsilan

(mit der Maßgabe, daß das Atomverhältnis Titan aus der Titan-Katalysatorkomponente (1) : Aluminium aus dem Triethylaluminium (2) 1:150 und das Molverhältnis Triethylaluminium (2) : weiterer Katalysatorkomponente (3) - d.h. dem Triethoxiphenylsilan - 1:0,1 beträgt) homopolymerisiert, mit den Maßgaben, daß in dieser ersten Polymerisationszone (i) bei einem Gesamtdruck von 28 bar sowie einer Temperatur von 70 °C gearbeitet wird, und (ii) das Verhältnis Propylen-Partialdruck : Wasserstoff-Partialdruck 100:0,2 beträgt, und dann

(B) in einer zweiten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus ein Gemisch aus Propylen und Ethylen durch Zufuhr des in der ersten Polymerisationszone erhaltenen Reaktionsgutes dem darin vorliegenden Propylen-Homopolymerisat hinzupolymerisiert, mit den Maßgaben, daß in dieser zweiten Polymerisationszone (i) bei einem Gesamtdruck von 13 bar sowie einer Temperatur von 50 °C gearbeitet wird, (ii) das Verhältnis Propylen-Partialdruck : Ethylen-Partialdruck 100:20 und das Verhältnis Propylen-Partialdruck : Wasserstoff-Partialdruck 100:10 beträgt, und (iii) das Verhältnis Gewicht des in der ersten Polymerisationszone (A) in Polymerisat umgesetztes Propylen : Gewicht des in der zweiten Polymerisationszone (B) in Polymerisat umgesetztes Gemisch aus Propylen und Ethylen den Wert 100:40 hat.

Der Erfindung entsprechend wird ferner so verfahren, daß man zusätzlich

(C) in einer weiteren Polymerisationszone in einem gerührten Bett aus kleinteiligem Polyethylen bei Abwesenheit eines flüssigen Reaktionsmediums aus der Gasphase heraus Ethylen mittels eines Ziegler-Katalysators, wie er im Beispiel 1 der DE-OS 25 43 272 beschrieben ist, homopolymerisiert, mit den Maßgaben, daß in dieser weiteren Polymerisationszone (i) bei einem Gesamtdruck von 30 bar sowie einer Temperatur von 140 °C gearbeitet wird, und (ii) das Verhältnis Gewicht des in der ersten Polymerisationszone (A) in Polymerisat umgesetztes Propylen : Gewicht des in der weiteren Polymerisationszone (C) in Polymerisat umgesetztes Ethylen einen Wert 100:26 hat, und das hierbei erhaltene Reaktionsgut ebenfalls der zweiten Polymerisationszone (B) zuführt.

Das so erhaltene Propylen-Ethylen-Polymerisat (23,7 kg/h) wird in einem Extruder in üblicher Weise dechloriert, stabilisiert und granuliert; es weist eine sehr günstige Balance von Steifigkeit, Zähigkeit bei Raumtemperatur und Kälteschlagzähigkeit auf.

## Patentansprüche

1. Verfahren zum Herstellen von Propylen-Ethylen-Polymerisaten, wobei man zunächst

(A) in einer ersten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus Propylen durch Zufuhr eines Ziegler-Natta-Katalysatorsystems aus

(1) einer Titan-Katalysatorkomponente,

(2) einer Organoaluminium-Katalysatorkomponente der Formel $AlR_mX_{3-m}$, worin stehen

X für einen Rest OR, Chlor, Brom bzw. Wasserstoff,

R für einen $C_1$-$C_{18}$-Kohlenwasserstoffrest,

m für eine Zahl von 1 bis 3 sowie

(3) - gegebenenfalls - einer weiteren Katalysatorkomponente

homopolymerisiert, mit den Maßgaben, daß in dieser ersten Polymerisationszone (i) bei einem Gesamtdruck von 20 bis 35 bar sowie einer Temperatur von 60 bis 90 °C gearbeitet wird, und (ii) das Verhältnis Propylen-Partialdruck : Wasserstoff-Partialdruck 100:0,01 bis 100:15 beträgt, und dann

(B) in einer zweiten Polymerisationszone in Anwesenheit von Wasserstoff als Molekulargewichtsregler in einem gerührten Bett aus kleinteiligem Polymerisat bei Abwesenheit eines flüssigen Reaktionsmediums aus der Gasphase heraus ein Gemisch aus Propylen und Ethylen durch Zufuhr des in der ersten Polymerisationszone erhaltenen Reaktionsgutes - sowie gegebenenfalls zusätzlicher Katalysatorkomponente (2) - dem darin vorliegenden Propylen-Homopolymerisat hinzupolymerisiert, mit den Maßgaben, daß in dieser zweiten Polymerisationszone (i) bei einem Gesamtdruck von 10 bis 20 bar sowie einer Temperatur von 50 bis 80 °C gearbeitet wird, (ii) das Verhältnis Propylen-Partialdruck : Ethylen-Partialdruck 100:10 bis 100:70 und das Verhältnis Propylen-Partialdruck : Wasserstoff-Partialdruck 100:2 bis 100:70 beträgt, und (ii) das Verhältnis Gewicht des in der ersten Polymerisationszone (A) in Polymerisat umgesetztes Propylen : Gewicht des in der zweiten Polymerisationszone (B) in Polymerisat umgesetztes Gemisch aus Propylen und Ethylen einen Wert zwischen 100:10 bis 100:60 hat,
dadurch gekennzeichnet, daß man zusätzlich

(C) in einer weiteren Polymerisationszone - gegebenenfalls in Anwesenheit von Wasserstoff als Molekulargewichtsregler - in einem gerührten Bett aus kleinteiligem Polymerisat bei Abwesenheit eines flüssigen Reaktionsmediums aus der Gasphase heraus Ethylen mittels Ziegler- oder Phillips-Katalyse homopolymerisiert, mit den Maßgaben, daß in dieser weiteren Polymerisationszone (i) bei einem Gesamtdruck von 20 bis 45 bar sowie einer Temperatur von 80 bis 120°C gearbeitet wird, (ii) - im gegebenen Fall - das Verhältnis Ethylen-Partialdruck : Wasserstoff-Partialdruck 100:0,01 bis 100:20 beträgt und (iii) das Verhältnis Gewicht des in der ersten Polymerisationszone (A) in Polymerisat umgesetztes Propylen : Gewicht des in der weiteren Polymerisationszone (C) in Polymerisat umgesetztes Ethylen einen Wert zwischen 100:5 bis 100:40 hat, und das hierbei erhaltene Reaktionsgut ebenfalls der zweiten Polymerisationszone (B) zuführt.

## Claims

1. A process for the preparation of propylene/ethylene polymers, in which first
    (A) in a first polymerization zone, propylene is homopolymerized in the presence of hydrogen as a molecular weight regulator, in a stirred bed of finely divided polymer and in the absence of a liquid reaction medium, from the gas phase, by feeding in a Ziegler-Natta catalyst system consisting of
        (1) a titanium catalyst component and
        (2) an organoaluminum catalyst component of the formula $AlR_mX_{3-}$, where X is OR, chlorine, bromine or hydrogen, R is a $C_1$-$C_{18}$-hydrocarbon radical and m is from 1 to 3,
        (3) with or without a further catalyst component, with the provisos that, in this first polymerization zone (i) the reaction is carried out under a total pressure of from 20 to 35 bar and at from 60 to 90°C and (ii) the ratio of the propylene partial pressure to the hydrogen partial pressure is from 100:0.01 to 100:15, and then
    (B) in a second polymerization zone, a mixture of propylene and ethylene is polymerized with the propylene homopolymer present in the reaction product obtained in the first polymerization zone in the presence of hydrogen as a molecular weight regulator, in a stirred bed of finely divided polymer and in the absence of a liquid reaction medium, from the gas phase, by feeding in the reaction product obtained in the first polymerization zone, with or without additional catalyst component (2), with the provisos that, in this second polymerization zone (i) the reaction is carried out under a total pressure of from 10 to 20 bar and at from 50 to 80°C, (ii) the ratio of the propylene partial pressure to the ethylene partial pressure is from 100:10 to 100:70 and the ratio of the propylene partial pressure to the hydrogen partial pressure is from 100:2 to 100:70, and (iii) the ratio of the weight of the propylene converted to polymer in the first polymerization zone (A) to the weight of the propylene/ethylene mixture converted to polymer in the second polymerization zone (B) is from 100:10 to 100:60,
    wherein in addition
    (C) in a further polymerization zone, ethylene is homopolymerized in the presence or absence of hydrogen as a molecular weight regulator, in a stirred bed of finely divided polymer and in the absence of a liquid reaction medium, from the gas phase, by means of Ziegler or Phillips catalysis, with the provisos that, in this further polymerization zone, (i) the reaction is carried out under a total pressure of from 20 to 45 bar and at from 80 to 120°C, (ii) where relevant, the ratio of the ethylene partial pressure to the hydrogen partial pressure is from 100:0.01 to 100:20 and (iii) the ratio of the weight of the propylene converted to polymer in the first polymerization zone (A) to the weight of the ethylene converted to polymer in the further polymerization zone (C) is from 100:5 to 100:40, and the resulting reaction product is likewise fed to the second polymerisation zone (B).

## Revendications

1. Procédé de préparation de copolymères propylène/éthylène, selon lequel
    A) On homopolymérise d'abord du propylène, dans une première zone de polymérisation, en présence d'hydrogène en tant que régulateur de poids moléculaire, dans un lit agité de polymère en petites particules, en l'absence de milieu réactionnel liquide, en phase gazeuse, avec apport d'un système catalytique Ziegler/Natta composé de :

1) un composant de catalyseur au titane;

2) un composant de catalyseur organo-aluminique de formule $AlR_mX_{3-m}$ dans laquelle

X est mis pour un radical OR , chloro, bromo ou hydrogène,

R est mis pour un reste hydrocarboné en $C_1$-$C_{18}$ et

m est mis pour un nombre de 1 à 3, ainsi que

3) éventuellement un autre composant de catalyseur, pourvu que, dans cette première zone de polymérisation, (i) on travaille sous une pression totale de 20 à 35 bar ainsi que sous une température de 60 à 90°C et (ii) le rapport pression partielle de propylène/pression partielle d'hydrogène soit compris entre 100:0,01 et 100:15, et

B) On polymérise , dans une deuxième zone de polymérisation, sur l'homopolymère de propylène qui s'y trouve un mélange de propylène et d'éthylène, en présence d'hydrogène en tant que régulateur de poids moléculaire, dans un lit agité de polymère en petites particules, en l'absence de milieu réactionnel liquide, en phase gazeuse, avec apport du produit de réaction obtenu dans la première zone de réaction - ainsi éventuellement que de composant de catalyseur (2) supplémentaire -, pourvu que, dans cette deuxième zone de polymérisation, (i) on travaille sous une pression totale de 10 à 20 bar ainsi que sous une température de 50 à 80°c, (ii) le rapport pression partielle de propylène : pression partielle d'éthylène soit de 100:10 à 100:70 et le rapport pression partielle de propylène : pression partielle d'hydrogène soit de 100:2 à 100:7, et (iii) le rapport poids du propylène transformé en polymère dans la première zone de polymérisation (A) : poids du mélange de propylène et d'éthylène transformé en polymère dans la deuxième zone de réaction (B) ait une valeur comprise entre 100:10 et 100:60, caractérisé en ce que, ensuite,

C) On polymérise de l'éthylène sous catalyse Ziegler ou Phillips , dans une autre zone de polymérisation - éventuellement en présence d'hydrogène en tant que régulateur de poids moléculaire -, dans un lit agité de polymère en petites particules, en l'absence de milieu réactionnel liquide, en phase gazeuse, pourvu que, dans cette autre zone de polymérisation, (i) on travaille sous une pression totale de 20 à 45 bar ainsi que sous une température de 80 à 120°C, (ii) - éventuellement - le rapport pression partielle d'éthylène : pression partielle d'hydrogène soit de 100 : 0,01 à 100 : 20 et (iii) le rapport poids de propylène transformé en polymère dans la première zone de polymérisation (A) : poids d'éthylène transformé en polymère dans l'autre zone de polymérisation (C)ait une valeur de 100:5 à 100:40, et on envoie le produit de réaction ainsi obtenu de la même manière à la deuxième zone de polymérisation (B).